# EUROPÄISCHE PATENTANMELDUNG

(11) **EP 1 512 850 A1**
(43) Veröffentlichungstag der Anmeldung: **09.03.2005**
(21) Anmeldenummer: 04102893.7
(22) Anmeldetag: 23.06.2004
(51) Int. Cl.: F01N 3/08, F01N 3/022, F01N 3/035, B01D 53/94

(54) **Partikelfilter**

(30) Priorität: 04.09.2003 DE 10341216
(71) Anmelder: J. Eberspächer GmbH & Co. KG, 73730 Esslingen (DE)
(72) Erfinder: Többen, Heike Dr., 73066 Uhingen (DE); Lehnen, Rainer Dr., 70329 Stuttgart (DE)
(74) Vertreter: Patentanwalts-Partnerschaft, Rotermund + Pfusch + Bernhard

(57) **Zusammenfassung**

Die vorliegende Erfindung betrifft ein Partikelfilter (1) für eine Brennkraftmaschine, insbesondere in einem Kraftfahrzeug. Um die Schadstoffemission der Brennkraftmaschine zu reduzieren, ist in das Partikelfilter (1) abströmseitig ein NOₓ-Speicherkatalysator (10) integriert.

## Beschreibung

Die vorliegende Erfindung betrifft ein Partikelfilter für eine Brennkraftmaschine, insbesondere in einem Kraftfahrzeug.

Derartige Partikelfilter werden in einer Abgasanlage einer Brennkraftmaschine, insbesondere bei Dieselmotoren, verwendet, um im Abgas mitgeführte Partikel, insbesondere Rußpartikel, aus den Abgasen herauszufiltern. Ein derartiges Partikelfilter wird zumindest bei Dieselmotoren auch als Rußfilter bezeichnet.

Andere in den Abgasen einer Brennkraftmaschine mitgeführte Schadstoffe sind beispielsweise Stickoxide NOₓ. Zur Reduzierung derartiger NOₓ-Emissionen ist es bekannt, in der Abgasanlage der Brennkraftmaschine einen DeNOₓ-Katalysator anzuordnen. Derartige DeNOₓ-Katalysatoren sind beispielsweise NOₓ-Speicherkatalysatoren sowie SCR-Systeme. Derartige NOₓ-Speicherkatalysatoren bestehen üblicherweise aus einem konventionellen Oxidations-Reduktions-Katalysator, der mit einer NOₓ-Speicherbeschichtung versehen ist. Eine solche NOₓ-Speicherbeschichtung besteht beispielsweise aus Alkaliund/oder Erdalkalioxiden, die während einer längeren Beladungsphase, während der die Brennkraftmaschine mager betrieben wird, die in den Abgasen enthaltenen Stickoxide als Nitrate speichern. Zur Regeneration der NOₓ-Speicherbeschichtung muss wiederholt eine kürzere Regenerationsphase durchgeführt werden, während der die Brennkraftmaschine fett betrieben wird. Während des Fettbetriebs werden die Nitrate zersetzt, wobei die dann freigesetzten Stickoxide nach üblichen 3-Wege-Mechanismen an Edelmetallen reduziert werden.

Im Unterschied dazu handelt es sich bei einem SCR-System um ein System, das mit selektiver katalytischer Reduktion arbeitet. Hierbei wird ein geeignetes Reduktionsmittel verwendet, das die Stickoxide reduziert, ohne dabei selbst im sauerstoffreichen Abgas (Magerbetrieb der Brennkraftmaschine) durch den Sauerstoff oxidiert zu werden. Geeignete Reduktionsmittel sind beispielsweise Ammoniak oder Ammoniak freisetzende Vorstufen, wie z. B. Harnstoff oder Ammoniumcarbamat sowie Kohlenwasserstoffe, die in den Abgasstrang eingedüst werden oder motorseitig, z.B. mittels einer verspäten Nacheinspritzung, bereitgestellt werden oder in der Abgasanlage direkt erzeugt werden.

Die vorstehend genannten Maßnahmen zur Reduzierung der Schadstoffemissionen einer Brennkraftmaschine beruhen auf dem Prinzip einer Abgasnachbehandlung bzw. Abgasreinigung. Zusätzlich wird auch versucht, den Betrieb der Brennkraftmaschine so zu beeinflussen, dass die entstehenden Abgase bereits weniger Partikel bzw. weniger Stickoxide enthalten. Derartige innermotorische Maßnahmen können beispielsweise durch Variation folgender Parameter beeinflusst werden: Einspritzdruck, Einspritzzeit, Einspritzdauer, Einspritzdüsengeometrie, Einspritzort. Bei bekannten Maßnahmen dieser Art hat sich jedoch gezeigt, dass eine innermotorische Reduzierung der NOₓ-Bestandteile zu einer signifikanten Erhöhung der Partikelemissionen der Brennkraftmaschine führt. Dem kann derzeit nur mit Partikelfiltern größerer Leistung entgegengewirkt werden. Des Weiteren führen bekannte Maßnahmen der vorstehend genannten Art, mit denen die Partikelemissionen innermotorisch reduziert werden sollen, zu einer drastischen Erhöhung der Stickoxid-Anteile im Abgas der Brennkraftmaschine. Um dem entgegen zu wirken, müssen dementsprechend leistungsfähigere DeNOₓ-Katalysatoren verwendet werden.

Die Verwendung sowohl eines Partikelfilters als auch eines DeNOₓ-Katalysators in einer Abgasanlage ist zumindest bei Brennkraftmaschinen, die in einem Kraftfahrzeug, insbesondere in einem Personenkraftwagen, angeordnet sind, regelmäßig nicht möglich, da der hierzu erforderliche Bauraum fehlt. Strengere Emissionsgesetze fordern jedoch die Einhaltung immer kleinerer Emissionsgrenzwerte.

Hier setzt die Erfindung an. Die vorliegende Erfindung beschäftigt sich mit dem Problem, für ein Partikelfilter der eingangs genannten Art eine vorteilhafte Ausführungsform anzugeben, die es insbesondere ermöglicht, die Schadstoffemission einer damit ausgestatteten Brennkraftmaschine zu reduzieren.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein Partikelfilter und einen NOₓ-Speicherkatalysator als integrale Einheit auszugestalten, bei welcher das Partikelfilter zuerst von den Abgasen durchströmt wird. Erfindungsgemäß wird dies durch eine abströmseitige Integration des NOₓ-Speicherkatalysators in das Partikelfilter erreicht. Das erfindungsgemäße Partikelfilter vereint somit die Funktion eines herkömmlichen Partikelfilters mit der Funktion eines herkömmlichen NOₓ-Speicherkatalysators. Hierdurch lassen sich besonders geringe Emissionswerte erzielen, wobei gleichzeitig eine kompakte Bauweise für die integrale Einheit erreicht werden kann. Beispielsweise kann der NOₓ-Speicherkatalysator in Form einer NOₓ-Speicherkatalysator-Beschichtung an der Abströmseite des Partikelfilters ausgebildet werden. Ein separater Katalysatorkörper und insbesondere ein separates Katalysatorgehäuse können somit vermieden werden.

Entsprechend einer vorteilhaften Ausführungsform kann in das Partikelfilter außerdem anströmseitig ein Oxidationskatalysator integriert sein. Ein derartiger Oxidationskatalysator generiert NO₂, das gegenüber Sauerstoff ein höheres Oxidationspotential aufweist. Hierdurch ist es möglich, die Partikel, insbesondere Ruß, im Partikelfilter bereits bei relativ niedrigen Temperaturen zu verbrennen. Gleichzeitig entsteht bei der Regeneration des Partikelfilters CO, das ein sehr hohes Reduktionspotenzial aufweist, was zweckmäßig für die Regeneration des NOₓ-Speicherkatalysators verwendet werden kann. Insgesamt ergibt sich somit ein Synergieeffekt, der die Regeneration sowohl des Partikelfilters als auch des NOₓ-Speicherkatalysators verbessert. Die kombinierte Partikelfilter-NOₓ-Speicherkatalysator-Einheit besitzt somit eine hohe Effizienz.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Prinzipdarstellung eines Längsschnitts durch ein erfindungsgemäßes Partikelfilter,
- Fig. 2: einen Querschnitt durch das Partikelfilter entsprechend den Schnittlinien II in Fig. 1.

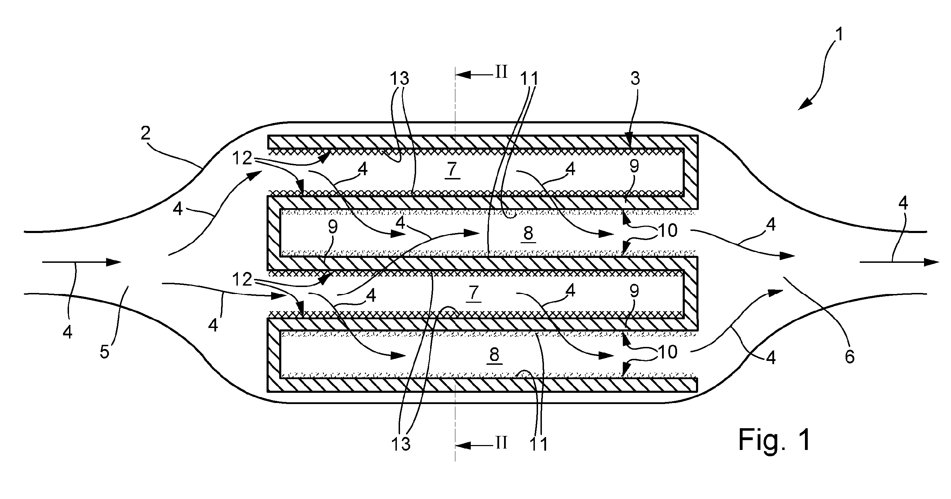

Entsprechend Fig. 1 besitzt ein erfindungsgemäßes Partikelfilter 1 ein Gehäuse 2, in dem ein Filterkörper 3 angeordnet ist. Das Gehäuse 2 ist zum Einbau in einen nicht gezeigten Abgasstrang einer ebenfalls nicht gezeigten Brennkraftmaschine, insbesondere eines Dieselmotors, adaptiert. Im Betrieb der Brennkraftmaschine, die vorzugsweise in einem Kraftfahrzeug angeordnet sein kann, ergibt sich dann eine Durchströmung des Partikelfilters 1 bzw. des Filterkörpers 3, die in Fig. 1 durch Pfeile 4 symbolisiert ist. In Abhängigkeit der Strömungsrichtung ergibt sich für das Partikelfilter 1 somit eine Anströmseite 5 sowie eine Abströmseite 6.

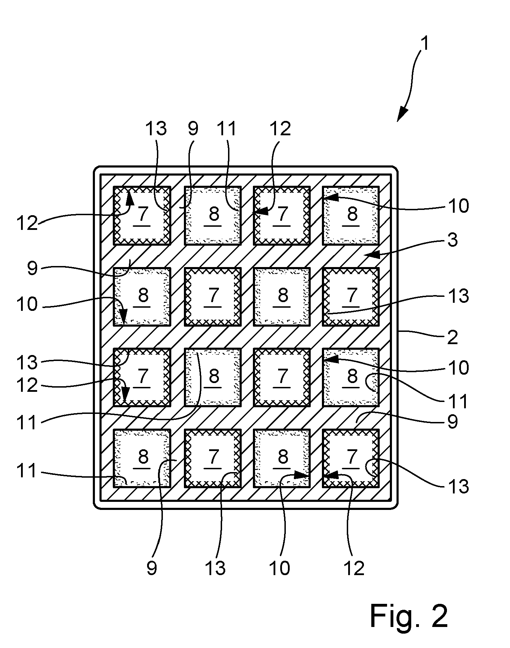

Entsprechend den Fig. 1 und 2 enthält der Filterkörper 3 mehrere Einlasskanäle 7 sowie mehrere Auslasskanäle 8. Die Kanäle 7 und 8 besitzen beispielsweise einen rechteckigen oder einen sechseckigen Querschnitt. Die Einlasskanäle 7 und die Auslasskanäle 8 sind schachbrettartig, einander abwechselnd angeordnet. Der Filterkörper 3 ist beispielsweise aus einer Keramik, insbesondere aus Siliciumcarbit oder aus Cordierit hergestellt.

Entsprechend Fig. 2 sind alle Einlasskanäle 7 zur Anströmseite 5 hin offen und zur Abströmseite 6 hin verschlossen. Im Unterschied dazu sind alle Auslasskanäle 8 zur Anströmseite 5 hin verschlossen und zur Abströmseite 6 hin offen.

Üblicherweise wird der Filterkörper 3 als Monolith hergestellt, der z.B. beidseitig offene Kanäle enthält. Durch ein wechselseitiges Verschließen der Kanäle an der Anströmseite 5 und der Abströmseite 6 werden die Einlasskanäle 7 und die Auslasskanäle 8 definiert. Alternativ kann der Filterkörper 3 grundsätzlich auch so als Monolith hergestellt werden, dass er bereits die wechselseitig verschlossenen Kanäle, also die Einlasskanäle 7 und die Auslasskanäle 8 aufweist.

Die benachbarten Kanäle 7 und 8 besitzen gemeinsame Wände 9. Die Einlasskanäle 7 und die Auslasskanäle 8 sind durch ihre gemeinsamen Wände 9 voneinander getrennt. Diese Wände 9 sind für die Abgase durchlässig und für die jeweiligen, aus den Abgasen herauszufilternden Partikel undurchlässig ausgebildet. Erreicht wird dies beispielsweise durch eine entsprechende Auswahl des Werkstoffs für den Filterkörper 3, sodass dieser beispielsweise entsprechend porös ist. Aufgrund der porösen Wände 9 ergibt sich die in Fig. 1 gezeigte Strömungssituation, sodass die Abgase in die Einlasskanäle 7 eintreten, die Wände 9 durchdringen und so in die Auslasskanäle 8 gelangen. Durch die Auslasskanäle 8 treten die Abgase dann aus dem Filterkörper 3 wieder aus. Bei der Durchströmung setzen sich die mitgeführten Partikel im Bereich der Einlasskanäle 7 an den Wänden 9 ab.

Erfindungsgemäß ist nun in das Partikelfilter 1 abströmseitig ein NOₓ-Speicherkatalysator 10 integriert. Bei der hier gezeigten Ausführungsform ist der NOₓ-Speicherkatalysator 10 am Filterkörper 3 abströmseitig ausgebildet. Die Integration eines derartigen NOₓ-Speicherkatalysators 10 wird vorzugsweise mittels einer NOₓ-Speicherkatalysator-Beschichtung 11 erreicht, die abströmseitig im Gehäuse 2 entsprechend angeordnet ist, zweckmäßig am Filterkörper 3.

Entsprechend der hier gezeigten, bevorzugten Ausführungsform ist die NOₓ-Speicherkatalysator-Beschichtung 11 in den Auslasskanälen 8 an den Wänden 9 angebracht. Auf diese Weise ergibt sich ein relativ großflächiger NOₓ-Speicherkatalysator 10. Bei der Durchströmung der Wände 9 wird somit automatisch auch die NOₓ-Speicherkatalysator-Beschichtung 11, also der NOₓ-Speicherkatalysator 10 von den Abgasen durchströmt. Mitgeführtes NOₓ kann in der NOₓ-Speicherkatalysator-Beschichtung 11 gespeichert werden. Somit sind die aus den Auslasskanälen 8 und folglich die aus dem Partikelfilter 1 austretenden Abgase im Wesentlichen frei von Partikeln und im Wesentlichen frei von NOₓ.

Gleichzeitig zeigen die Fig. 1 und 2 deutlich, dass die erfindungsgemäße Kombination aus einem Partikelfilter 1 und einem NOₓ-Speicherkatalysator 10 nicht mehr Bauraum benötigt als ein herkömmliches Partikelfilter 1. Dies ist insbesondere für Anwendungen bei Kraftfahrzeugen von enormem Vorteil.

In die hier gezeigte, besonders vorteilhafte Ausführungsform des erfindungsgemäßen Partikelfilters 1 ist außerdem anströmseitig ein Oxidationskatalysator 12 integriert. Im vorliegenden Fall ist dieser Oxidationskatalysator 12, der beispielsweise mit Platin arbeitet, anströmseitig am Filterkörper 3 ausgebildet. Zweckmäßig kann auch der Oxidationskatalysator 12 mit Hilfe einer entsprechenden Oxidationskatalysator-Beschichtung 13 hergestellt werden, die beispielsweise an der Anströmseite 5 im Gehäuse 2, vorzugsweise jedoch anströmseitig am Filterkörper 3 angebracht ist. Bei der hier gezeigten, bevorzugten Variante ist der Oxidationskatalysator 12 in den Einlasskanälen 7 an den Wänden 9 durch eine solche Oxidationskatalysator-Beschichtung 13 ausgebildet. Auf diese Weise erhält auch der Oxidationskatalysator 12 eine große Oberfläche, was für dessen Wirksamkeit von Vorteil ist. Gleichzeitig wird erreicht, dass überall dort, wo sich die Partikel in oder an den Wänden 9 ablagern, der Oxidationskatalysator 12 vorhanden ist.

Im Betrieb des Partikelfilters 1 lagern sich zum einen die ausgeschiedenen Partikel an den Einlasskanälen 7 zugewandten Seiten der Wände 9 ab. Die Beladung der Wände 9 mit Partikeln erfolgt somit entlang des Oxidationskatalysators 12. Zum anderen werden in der NOₓ-Speicherkatalysator-Beschichtung 11, also an den Auslasskanälen 8 zugewandten Seiten der Wände 9 NOₓ-Moleküle eingelagert. Das Partikelfilter 1 besitzt sowohl für die Einlagerung der Partikel als auch für die Speicherung der NOₓ-Moleküle eine begrenzte Speicherkapazität. Zweckmäßig sind die Speicherkapazitäten für die Partikel und die NOₓ-Moleküle aufeinander abgestimmt, sodass die Speichergrenzen relativ nahe beieinander liegen. Bei Erreichen der Speichergrenzen wird eine kombinierte Regeneration des Partikelfilters 1 hinsichtlich seiner Partikel- und NOₓ-Beladung angestoßen. Die Regeneration hinsichtlich der Partikel-Beladung kann beispielsweise durch eine geeignete Temperaturanhebung in den Abgasen erreicht werden. Die so angestoßene Verbrennung der Partikel, insbesondere die Rußverbrennung, erfolgt mit Hilfe des Oxidationskatalysators 12 mittels NO₂. Ein derartiger Verbrennungsprozess kann aufgrund des gegenüber Sauerstoff höheren Oxidationspotenzials bereits bei relativ niedrigen Abgastemperaturen, z.B. ab 350°C, ablaufen. Außerdem läuft eine derartige Partikelverbrennung vergleichsweise langsam ab, so dass die dabei auftretende Reaktionsexothermie vergleichsweise gering ist. Da somit nur ein vergleichsweise geringer Temperaturanstieg im Filterkörper 3 entsteht, kann eine Überhitzung des NOₓ-Speicherkatalysators 10 vermieden werden.

Durch einen Fettbetrieb der Brennkraftmaschine erfolgt die Regeneration hinsichtlich der NOₓ-Beladung. Gleichzeitig bildet sich während der Partikelverbrennung CO, das die Regeneration des NOₓ-Speicherkatalysators 10 zusätzlich unterstützt. Hierdurch ergibt sich ein vorteilhafter Synergieeffekt.

Für den Fall einer aktiven Regenerationsstrategie muss durch eine geeignete Regelung des Systems der Sauerstoffgehalt im Abgas gesenkt werden, um eine möglichst "sanfte" Regeneration des Partikelfilters 1 zu erhalten. Hierbei ist es zweckmäßig, bekannte NOₓ-Regenerationsstrategien zu berücksichtigen. Beispielsweise können luftseitige und/oder kraftstoffseitige Maßnahmen zur Beeinflussung des Restsauerstoffgehalts im Abgas durchgeführt werden, beispielsweise Abgasrückführung, Ladeluftkühlung, Drosselung der Ansaugluft, innermotorische Nacheinspritzung, abgasseitige Kraftstoffeindüsung etc.

Im Kraftstoff können Schwefelbestandteile enthalten sein, die zur Bildung von Schwefeldioxid und damit zur möglichen Bildung von Sulfaten führen können. Derartige Sulfate können sich im NOₓ-Speicherkatalysator 10 einlagern, wodurch die Speicherfähigkeit des NOₓ-Speicherkatalysators 10 für NOₓ stark abnimmt, in der Folge kann es zu einer sog. Schwefelvergiftung des NOₓ-Speicherkatalysators 10 kommen. Dementsprechend kann es erforderlich sein, in entsprechenden Abständen eine Desulfatisierung des NOₓ-Speicherkatalysators 10 durchzuführen. Eine derartige Desulfatisierung wird beispielsweise bei sehr hohen Temperaturen von über 700°C und bei einem unterstöchiometrischen Luftverhältnis durchgeführt. Eine derartige Desulfatisierung erfordert ihrerseits eine Anhebung des Abgastemperaturniveaus sowie eine Absenkung des Luftverhältnisses, was ebenfalls durch entsprechende luftseitige bzw. kraftstoffseitige Maßnahmen erreicht werden kann. Eventuell kann eine zumindest abschnittsweise Kombination der Regeneration des Partikelfilters 1 mit der Desulfatisierung des NOₓ-Speicherkatalysators 10 sinnvoll sein.

Die niedrigen Temperaturen während der Partikelverbrennung gewährleisten, dass sich der NOₓ-Speicherkatalysator 10 während des Regenerationsbetriebs in einem Temperaturfenster bewegt, in dem die 3-Wege-Mechanismen zur Regeneration des NOₓ-Speicherkatalysators 10 üblicherweise ablaufen.

## Patentansprüche

1. Partikelfilter für eine Brennkraftmaschine, insbesondere in einem Kraftfahrzeug, mit abströmseitig integriertem NOₓ-Speicherkatalysator (10).

2. Partikelfilter nach Anspruch 1,
**dadurch gekennzeichnet,**
**dass** das Partikelfilter (1) einen von Abgasen durchströmbaren Filterkörper (3) aufweist, an dem abströmseitig der NOₓ-Speicherkatalysator (10) ausgebildet ist.

3. Partikelfilter nach Anspruch 2,
**dadurch gekennzeichnet,**
- **dass** der Filterkörper (3) mehrere anströmseitig offene und abströmseitig geschlossene Einlasskanäle (7) sowie mehrere anströmseitig geschlossene und abströmseitig offene Auslasskanäle (8) aufweist,
- **dass** die Einlasskanäle (7) und die Auslasskanäle (8) durch gemeinsame Wände (9) voneinander getrennt sind, die für die Abgase durchlässig und die daraus auszufilternden Partikel undurchlässig sind,
- **dass** der NOₓ-Speicherkatalysator (10) in den Auslasskanälen (8) an den Wänden (9) durch eine NOₓ-Speicherkatalysator-Beschichtung (11) ausgebildet ist.

4. Partikelfilter nach Anspruch 3,
**dadurch gekennzeichnet,**
**dass** der Filterkörper (3) aus Keramik, insbesondere aus Siliciumcarbit oder Cordierit, besteht.

5. Partikelfilter nach einem der Ansprüche 1 bis 4,
**dadurch gekennzeichnet,**
**dass** in das Partikelfilter (1) anströmseitig ein Oxidationskatalysator (12) integriert ist.

6. Partikelfilter nach den Ansprüchen 5 und 2,
**dadurch gekennzeichnet,**
**dass** der Oxidationskatalysator (12) am Filterkörper (3) anströmseitig ausgebildet ist.

7. Partikelfilter nach den Ansprüchen 6 und 3,
**dadurch gekennzeichnet,**
**dass** der Oxidationskatalysator (12) in den Einlasskanälen (7) an den Wänden (9) durch eine Oxidationskatalysator-Beschichtung (13) ausgebildet ist.

8. Partikelfilter nach einem der Ansprüche 5 bis 7,
**dadurch gekennzeichnet,**
**dass** der Oxidationskatalysator (12) mit Platin arbeitet.

9. Abgasanlage für eine Brennkraftmaschine, insbesondere Dieselmotor, mit wenigstens einem Partikelfilter (1) nach einem der Ansprüche 1 bis 8.

10. Abgasanlage nach Anspruch 9,
**dadurch gekennzeichnet,**
**dass** die Brennkraftmaschine in einem Kraftfahrzeug angeordnet ist.
